# EUROPEAN PATENT APPLICATION

(11) **EP 3 514 884 A1**
(43) Date of publication of application: **24.07.2019**
(21) Application number: 19152059.2
(22) Date of filing: 16.01.2019
(51) Int. Cl.: H01M 10/42, H02J 7/00

(54) **BATTERY MANAGEMENT SYSTEM**

(30) Priority: 17.01.2018 CN 201820076218 U
(71) Applicant: TTI (Macao Commercial Offshore) Limited, Macao (MO)
(72) Inventor: Lee, Hei Man Raymond, Kwai Chung (HK); Li, Yong Min, Dongguan City (CN); Zhuang, Ming Jun, Dongguan City (CN); Wang, Ren Jie, Dongguan City (CN)
(74) Representative: Stevenson-Hill, Jack Patrick

(57) **Abstract**

A battery management system including an analog front end adapted to be connected to a battery, and an MCU connected to the analog front end; and an interface module connected to the MCU. The battery management system is packaged in the form of system chips. The above system chip design not only simplifies the structure of the entire battery management system, but also the cost, the design difficulty, and various possible failure opportunities including electromagnetic interference can be reduced.

## Description

### FIELD OF THE DISCLOSURE

The invention relates to a control circuit, and in particular to a battery management system for a battery pack.

### BACKGROUND

With the popularity and wide application of power tools, more and more users are beginning to know and use power tools, and the need for intelligent power tools is increasing. However, in general it is necessary to obtain corresponding intelligent functions through relatively complicated circuit design.

For example, many power tools use battery packs for cordless operation. Some battery packs are equipped with intelligent functions such as Bluetooth and other types of communication. However, complicated circuit design not only increases the power consumption and vulnerability of the circuit, but also leads to an increase in design cost and an increase in design difficulty.

### SUMMARY

Accordingly, embodiments of the present invention provide an improved battery management system that overcomes or at least alleviates the above-described technical problems.

In one aspect, the present invention provides a battery management system that contains an analog front end adapted to be connected to a battery, and an MCU connected to the analog front end; and an interface module connected to the MCU. The battery management system is packaged in the form of a system chip.

In a specific embodiment, the interface module is a Bluetooth module.

In another specific embodiment, the interface module is a Zigbee or WiFi module.

In still another specific embodiment, the interface module is a Type-C control module.

In yet another specific embodiment, the interface module has both a Type-C control function and a Bluetooth communication function.

Preferably, the Type-C control module is adapted to be connected to a Type-C interface external to the battery management system.

In yet another embodiment, the MCU has an I2C/UART pin or an I/O pin adapted to be connected to an external device.

In yet another embodiment, the battery management system further includes a low dropout linear regulator (LDO) to be connected to and provide power to other components in the battery management system.

In another aspect, the present invention provides a battery management system including an analog front end adapted to be connected to a battery, and an interface module. The interface module includes an MCU, and the MCU is connected to the analog front end.

In a specific embodiment, the interface module is a Bluetooth module.

Therefore, in one embodiment, the battery management system provided by the present invention has an integrated system on chip design that integrates the following functions: AFE (Analog Front End), MCU (Microcontroller), and Interface Module, such as Bluetooth module and Type-C charge and discharge control functions. The battery management system module is adapted to monitor the voltage, temperature and other signals of the battery pack and communicate with other devices through the Bluetooth module. The Type-C control module can control the charging process when the charger is connected through the USB Type-C interface, and when the electric equipment is connected through the USB Type-C interface, the power of the battery pack itself can be used to provide power. The above system chip design not only simplifies the structure of the entire battery management system, but also the cost, the design difficulty, and various possible failure opportunities including electromagnetic interference can be reduced.

In another embodiment, the battery management system provided by the present invention utilizes an MCU already included in the Bluetooth chip, so no additional MCU components are needed. Such a Bluetooth chip also includes the SPI, I2C/UART, I/O and other pins required by the battery management system. After being connected to the AFE design, functions such as monitoring, protection, and communication of the battery management system implements can be implemented including wireless communication functions through the Bluetooth function. Therefore, the structure of the entire battery management system can be simplified and the costs can be reduced by the design.

Any of the optional features discussed above in relation to one of the aspects of the invention may, where appropriate, be applied to another aspect of the invention.

### BRIEF DESCRIPTION OF THE DRAWINGS

The performance and advantages of the present invention will be further understood by reference to the rest of the specification and the accompanying drawings. In some cases, a sub-tag is placed after a label and hyphen to represent one of many similar components. When referring to a label but not specifically stating one existing sub-tag, it refers to all of these similar components.
Figure 1 is a block diagram showing the structure of a battery management system in accordance with a first embodiment of the present invention.
Figure 2 is a block diagram showing the structure of a battery management system in accordance with a second embodiment of the present invention.
Figure 3 is a block diagram showing the structure of a battery management system in accordance with a third embodiment of the present invention.
Figure 4 is a block diagram showing the structure of a battery management system in accordance with a fourth embodiment of the present invention.
Figure 5 is a block diagram showing the structure of a battery management system in accordance with a fifth embodiment of the present invention.

### DETAILED DESCRIPTION OF PREFERRED EMBODIMENTS

The embodiment of the present invention uses an integrated system on chip design to integrate a communication module, an AFE, an MCU, etc. into a single chip for battery management purposes. Other different benefits and advantages provided by the various embodiments of the present invention are readily envisaged from the following description.

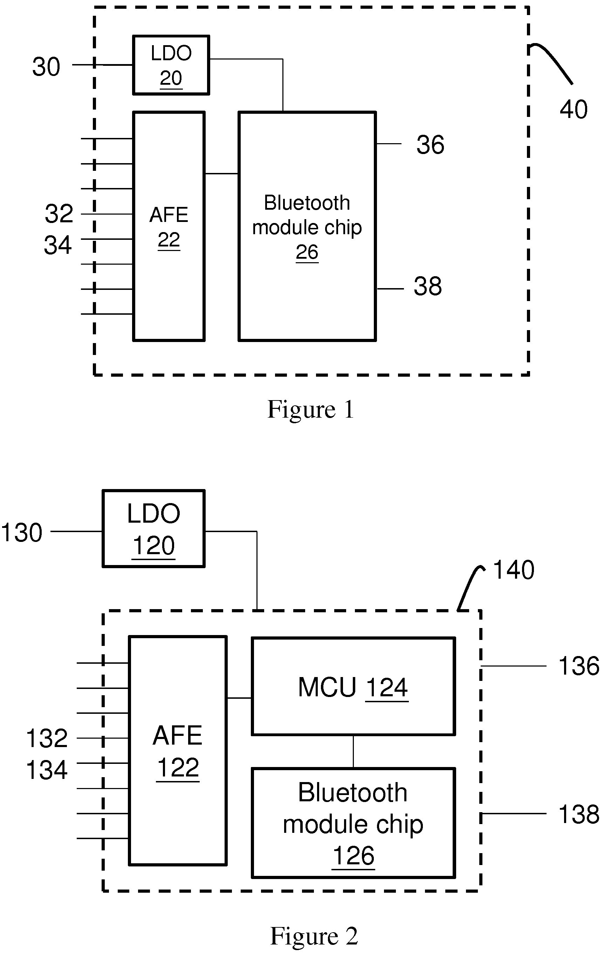

Referring first to Figure 1, a first embodiment of the present invention relates to a battery management system 40 that includes an LDO 20 (a low dropout linear regulator), a Bluetooth module chip 26, and an AFE (analog front end) 22. The LDO 20 is used to power other components of the battery management system 40 including the Bluetooth module chip 26. The LDO 20 has a power input 30 that can be connected to an external power source to provide power required by the battery management system 40. Such an external power source is, for example, a battery unit (not shown) in which a battery management system 40 is included in a battery pack (not shown). The AFE 22 has a plurality of pins that can be connected to one or more battery packs. These pins include, for example, a battery voltage input 32 and a battery temperature detection terminal 34. The AFE 22 is on the other hand connected to the Bluetooth module chip 26. The Bluetooth module chip 26 is a separate chip with a separate package, but the Bluetooth module chip 26 has an MCU (none of which is shown) in addition to the control chip associated with the Bluetooth communication function. Therefore, the AFE 22 is actually connected to the MCU in the Bluetooth module chip 26, and the functions of monitoring, protection, communication, etc. of the battery management system 40 through the AFE 22 can be implemented by the MCU, and the wireless communication function through the Bluetooth control chip can be implemented. The Bluetooth module chip 26 also has terminals adapted to be connected to external devices, such as SPI (not shown), I2C/UART pins 36, I/O pins 38, such that the battery management system 40 can be connected to other parts of the battery pack through the Bluetooth module chip 26, such as a battery pack communication terminal (not shown) connected to a power tool or a charger, and the like.

In a variant embodiment, the battery management system in Figure 1 can also be packaged in the form of a system chip, in which case the Bluetooth module will no longer exist as a separate chip, but as a part of the functionality of the overall battery management system..

Then referring to Figure 2. A second embodiment of the present invention relates to a battery management system 140 that is packaged in the form of a system chip. That is, the entire battery management system 140 is physically presented in the form of an integrated circuit. What is shown in Figure 2 is actually an equivalent circuit diagram of the battery management system chip. In particular, the battery management system 140 includes a Bluetooth module 126, and an AFE 122. Unlike the embodiment of Figure 1, the battery management system 140 of Figure 2 has a separate MCU 124 that is separate from the Bluetooth module 126 (note that all of these components are a part of the equivalent functionality of the system chip). In addition, in Figure 2, the LDO 120 is not a part of the battery management system chip, but is externally arranged. The functions of LDO 120 and AFE 122 in Figure 2 and the manner in which they are connected to other components (for example, LDO 120 has a power input 130) are similar to those described in Figure 1 which are not described herein. The MCU 124 is connected to the AFE 122 and the Bluetooth module 126. In addition, the MCU 124 also has the function of communicating with external devices through I2C/UART and I/O. However, since the entire battery management system 140 exists as a system chip, the I2C/UART pin 136, the I/O pin 138, and the terminals of the AFE 122 that are connected to the battery unit (for example, the battery voltage input terminal 132 and the battery temperature detection terminal 134) are actually the pins of the system chip.

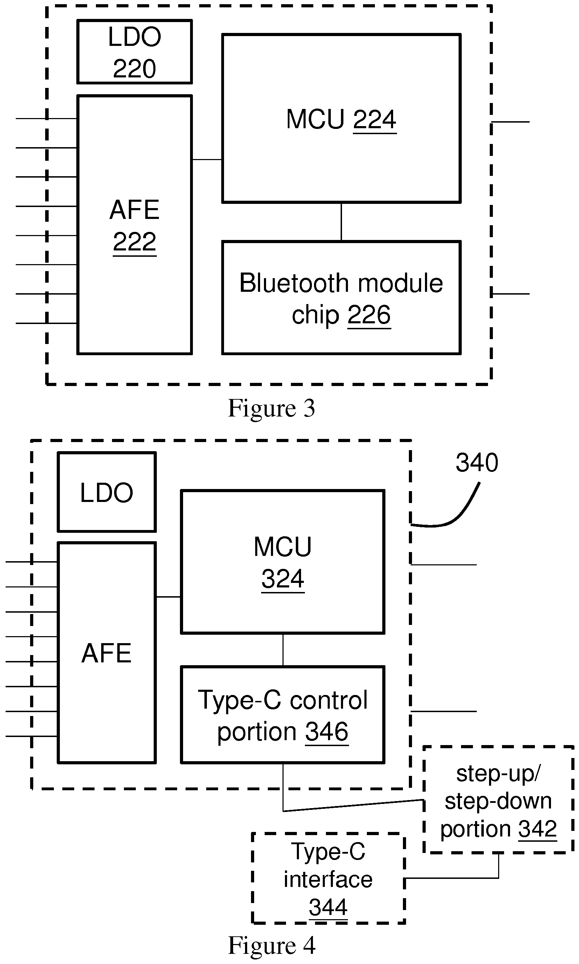

Turning to Figure 3, a third embodiment of the present invention relates to a battery management system 240 that is substantially identical to the battery management system of Figure 2, and their identical or similar portions are not described herein. The differences between the embodiments shown in Figures 3 and 2 lie in that the LDO 220 is integrated into the system chip of the battery management system 240 of Figure 3, so the battery management system 240 eliminates the need for additional external LDO modules. The built-in LDO 220 is also other component including MCU 224, AFE 222, and Bluetooth module 226.

Turning to Figure 4, a fourth embodiment of the present invention relates to another battery management system 340, where parts identical to or similar with those in the battery management system shown in Figure 3 will not be described in detail herein. The differences between the embodiments shown in Figures 4 and 3 lie in that the Bluetooth module 226 does not exist in the system chip of the battery management system 340 of Figure 4, but the Type-C control portion 346 exists. The Type-C control portion 346 is connected to and controlled by the MCU 324. The battery management system chip is capable of externally connected to necessary components for implementing USB Type-C power transmission and/or communication functions, including a step-up/ step-down portion 342, and a Type-C interface 344. Thus, the battery management system 340 can communicate with external devices via a USB Type-C interface (for example, on a housing of the battery pack), such as transmitting battery pack status information and receiving control commands, or implementing the charging the battery pack via a USB Type-C interface, or charging the external device (for example, discharging the battery pack).

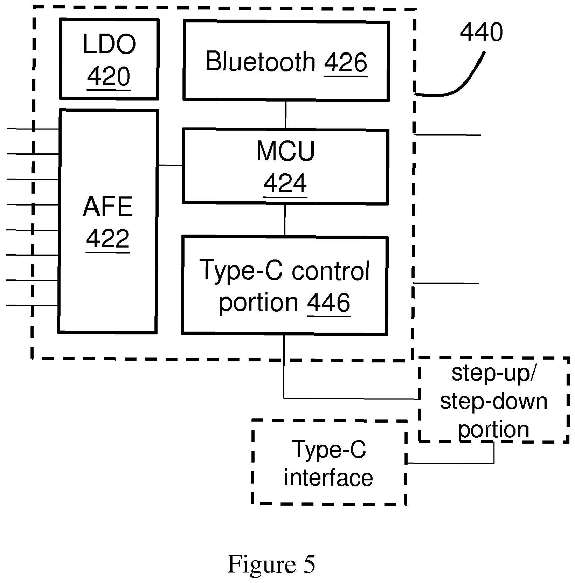

Turning to Figure 5, a fifth embodiment of the present invention relates to another battery management system 440, where parts identical to or similar with those in the battery management system shown in Figure 4 will not be described in detail herein. The differences between the embodiment shown in Figure 5 and Figure 4 lie in that the system chip of the battery management system 440 of Figure 5 includes both the Bluetooth module 426 and the Type-C control portion 446. Both are connected to and controlled by the MCU 424 at the same time. Therefore, the battery management system 440 described in Figure 5 can communicate with an external device using Bluetooth, or communicate with an external device through a USB Type-C interface, and can also charge and discharge the battery pack through the USB Type-C interface.

Having thus described several embodiments, those skilled in the art will recognize that various modifications, additional structures, and equivalents thereof may be used without departing from the scope of the invention. Accordingly, the above description should not be taken as a limitation to the scope of the invention as defined by the following claims.

For example, the interface modules in the above embodiments include a Bluetooth module and/or a control module of a USB Type-C. However, those skilled in the art will appreciate that other types of interface modules can also be integrated into a single battery management system chip, such as a Zigbee interface module or a WiFi interface module.

In addition, in some embodiments, the control module of the USB Type-C and Bluetooth (or other wireless communication module, such as Zigbee/WiFi) can also be packaged on the same system chip, which can be achievable, because the control module of the USB Type-C has different functions from other wireless communication modules. That is to say, the interface module of the battery management system can include two or more interface functions at the same time.

## Claims

1. A battery management system, comprising:
an analog front end adapted to be connected to a battery;
an MCU connected to the analog front end; and
an interface module connected to the MCU;
wherein, the battery management system is packaged in the form of a system chip.

2. The battery management system of claim 1, wherein the interface module is a Bluetooth module.

3. The battery management system of claim 1, wherein the interface module is a Zigbee or WiFi module.

4. The battery management system of claim 1, wherein said interface module is a Type-C control module.

5. The battery management system of claim 1, wherein the interface module has both a Type-C control function and a Bluetooth communication function

6. The battery management system of claim 4 or 5, wherein the Type-C control module is adapted to be connected to a Type-C interface external to the battery management system.

7. The battery management system of any preceding claim, wherein the MCU has an I2C/UART pin or an I/O pin adapted to be connected to an external device.

8. The battery management system of any preceding claim further comprising a low dropout linear regulator to be connected to and provide power to other components in the battery management system.

9. A battery management system, comprising:
an analog front end adapted to be connected to a battery;
an interface module;
the interface module including an MCU, and the MCU is connected to the analog front end.

10. The battery management system of claim 9, wherein the interface module is a Bluetooth module.
